Europäisches Patentamt

(19) European Patent Office

Office européen des brevets

(11) EP 0 945 862 A2

## (12) EUROPEAN PATENT APPLICATION

(43) Date of publication:
29.09.1999 Bulletin 1999/39

(51) Int. Cl.⁶: **G11B 27/034**, G11B 27/34, G11B 27/10

(21) Application number: 99302235.9

(22) Date of filing: 23.03.1999

(84) Designated Contracting States:
AT BE CH CY DE DK ES FI FR GB GR IE IT LI LU
MC NL PT SE
Designated Extension States:
AL LT LV MK RO SI

(30) Priority: 25.03.1998 JP 7713698

(71) Applicant: SONY CORPORATION
Tokyo 141 (JP)

(72) Inventor: **Shinichi, Komori**
**Shinagawa-ku, Tokyo 141 (JP)**

(74) Representative:
**Pratt, Richard Wilson et al**
**D. Young & Co,**
**21 New Fetter Lane**
**London EC4A 1DA (GB)**

(54) **Image searching**

(57) An image searching device and method improves the operational efficiency of image editing.

In the image searching device and method a desired frame image from a sequence of multiple frame image (45) is displayed on a display. The amplitude (AE) of audio data (47) corresponding to the selected frame image is also displayed on the display means by the audio display means. Thus, the frame image can be searched by visually confirming the amplitude of audio data corresponding to the desired frame image displayed on the display means.

FIG. 5

EP 0 945 862 A2

## Description

The present invention relates to an image searching device and a image searching method. Embodiments of the invention apply the device and method to an editing list forming device for specifying a desired part in the image and sound based on the video audio data as a clip for example.

Heretofore, in this type of editing list forming device, when reproducing images and sounds based on the video audio data at high speed, the operator specifies a desired part in images and sounds based on the video audio data as a clip by visually confirming images displayed on the display as well as listening to sounds output from the speaker corresponding to the images.

However, in case of conducting the clip specifier operation to the video audio data formed of images and sounds to be reproduced for a protracted period, it is necessary for the operator to search for images sequentially from the beginning until reaching the in-point or out-point of the desired part of images and sounds based on the video audio data, by visually confirming the display.

Then, in order to specify the image frame of the in-point or out-point at the time when reaching close to the in-point or out-point, in practice, the operator should repeatedly listen to the sound corresponding to the time position of the frame image of the in-point or out-point. This is a time-consuming job, and very high operational skill is required for the operator to specify the frame image of the in-point or out-point only by listening to sounds. As a result, it caused very complicated operation.

Aspects of the invention are specified in the claims to which attention is directed.

Embodiments of the present invention seek to provide an image searching device and image searching method, in which operational efficiencies of editing works can be remarkably improved.

An embodiment of the present invention provides an image searching device and the image searching method for searching the desired frame image from a sequence of multiple frame images. Frame images are sequentially extracted from multiple frame images at established extracting intervals with using the extracting means. After each frame image extracted is scaled down, each of the resulting index image is displayed on the display means by the display control means and simultaneously the extracting intervals will be set by the interval setting means according to the external operation.

As a result, if the desired index image can be selected from multiple index images displayed on the display means, the desired index image can be selected more easily and in a shorter period of time than in case of conventional searching multiple frame images successively from the beginning.

Furthermore, in an embodiment of the image searching device and the image searching method according to the invention for searching a desired frame image from a sequence of multiple frame images, on the audio data allocated respectively to multiple frame images, the amplitude of audio data corresponding to the selected frame images according to the internal operation can be displayed on the display means by the audio display means.

With this arrangement, since the frame images can be searched by visually confirming the amplitude of audio data corresponding to the desired frame image displayed on the display means, the processing can be conducted in a shorter period of time than the case where the operator conducts this type of work by actually listening to the sounds.

A better understanding of the present invention will become apparent from the following illustrative description when read in conjunction with the accompanying drawings in which like parts are designated by like reference numerals or characters.

In the accompanying drawings:

Fig. 1 is a block diagram showing the construction of an illustrative editing device according to the present invention;
Fig. 2 is a brief linear diagram illustrating the storage condition on the file of motion video data and audio data;
Fig. 3 is brief linear diagram showing the GUI screen;
Fig. 4 is a brief linear diagram showing the GUI screen;
Fig. 5 is a brief linear diagram showing the GUI screen;
Fig. 6 is a flowchart showing the clip specification processing procedure;
Fig. 7 is a flowchart showing the initial setting processing procedure;
Fig. 8 is a flowchart showing the MIN tab button setting processing procedure;
Fig. 9 is a flowchart showing the SEC tab button setting processing procedure;
Fig. 10 is a flow-chart showing the index image selection processing procedure;
Fig. 11 is a flowchart showing the index image setting processing procedure;
Fig. 12 is a flowchart showing the previous stage scroll processing procedure;
Fig. 13 is a flowchart showing the latter stage scroll processing procedure;
Fig. 14 is a flowchart showing the index display processing procedure;
Fig. 15 is a brief linear diagram illustrating the index window display condition;
Fig. 16 is a brief linear diagram illustrating the index window display condition.

Preferred illustrative embodiments of this invention will be described with reference to the accompanying drawings:

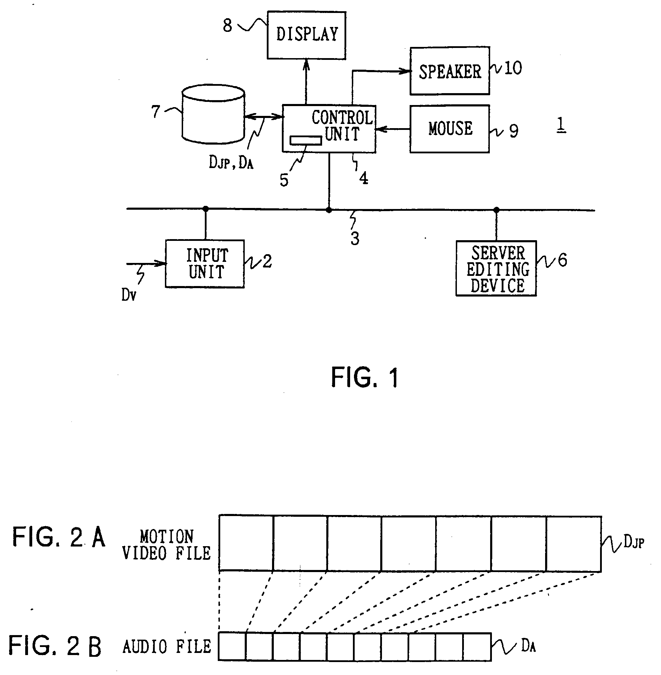

In Fig. 1, 1 generally shows an editing list forming device as an illustrative image searching device according to the present invention. Video audio data $D_{AV}$ supplied from the outside is supplied to a video capture board 5 provided in a control unit 4 via an input unit 2 and Ethernet 3, and simultaneously, to a server editing device 6.

This video capture board 5, after converting the video audio data $D_{AV}$ to digital data, sequentially captures frame images of the motion video data $D_{JP}$ formed per frame into the hard disc device 7 by compression coding with the motion joint photographic coding expert group (JPEG) system and also captures the audio data $D_A$ which is applied to the sampling per frame in synchronous with the motion video data $D_{JP}$ into the hard disc device 7.

As shown in Fig. 2, under the control of the control unit 5, the hard disc device 7 stores the motion video data $D_{JP}$ captured into the file, with specifying the address per frame, as well as storing audio data $D_A$ into the file with specifying the address per unit corresponding to one frame. The application is set for the control unit 4 to randomly access sequentially to the motion video data $D_{JP}$ and audio data $D_A$ with making the time required for reading and writing one frame image as an access unit.

Thus, in the hard disc device 7, the motion video data $D_{JP}$ and audio data $D_A$ based on multiple video audio data $D_{AV}$ are stored and the motion video data $D_{JP}$ and audio data $D_A$ based on the desired video audio data $D_{AV}$ are selectively read out upon request according to the predetermined procedure.

In this case, the control unit 4 displays the predetermined operation screen (hereinafter referred to as main screen) on the display 8 at the initial stage. In this state, after reading the motion video data $D_{JP}$ and audio data $D_A$ based on the desired video audio data $D_{AV}$ from the hard disc device 7, the control unit 4 transmits these data to the video capture board 5. The video capture board 5 restores multiple frame images to the original frame images by conducting the expansion coding processing based on the motion video data $D_{JP}$, and converts the sound corresponding to the frame image to analog mode when necessary.

Accordingly, in this editing list forming device 1, an operator can specify the desired part of video and audio by operating a mouse 9 based on the images displayed on the display 8 and the sound from a speaker 10. Moreover, making the specified part as the clip, related data such as the time code and duration of its in-point and out-point can be registered in the control unit 4.

With this arrangement, when the clip is specified in the control unit 5, related data showing the clip is given to the server editing device 6 via the Ethernet 3. This server editing device 6, extracts video and audio corresponding to the clip specified on the video audio data $D_{AV}$ supplied via the input unit 2 and the Ethernet 3, and edits each clip to various states such as special effects according to the operator's command.

(2) Processing of Control Unit on Main Screen

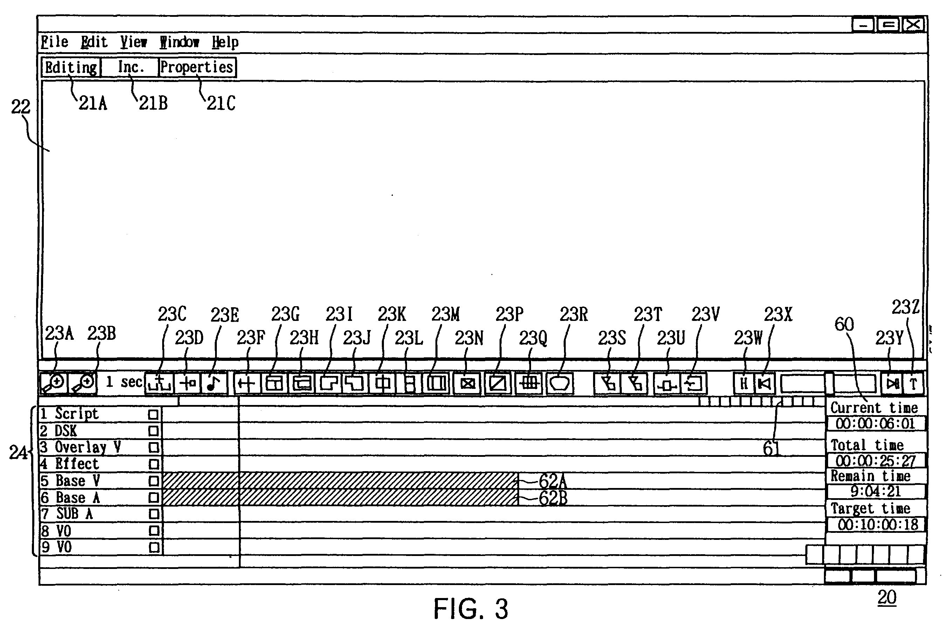

In practice, when the power is turned on, the control unit 4 firstly displays graphical user interface (GUI) screen 20 as shown in Fig. 3 on the display screen of the display 8 based on the program stored in the internal ROM (not shown in Fig.). In this GUI screen 20, there are provided multiple buttons 21A ~ 21C for selecting the processing contents the operator desires, a data display unit 22 for displaying the contents corresponding to the selected buttons 21A ~ 21C, multiple buttons 23A ~ 23Z for specifying various processing when making the clip, and an editing list forming unit 24 for making the clip.

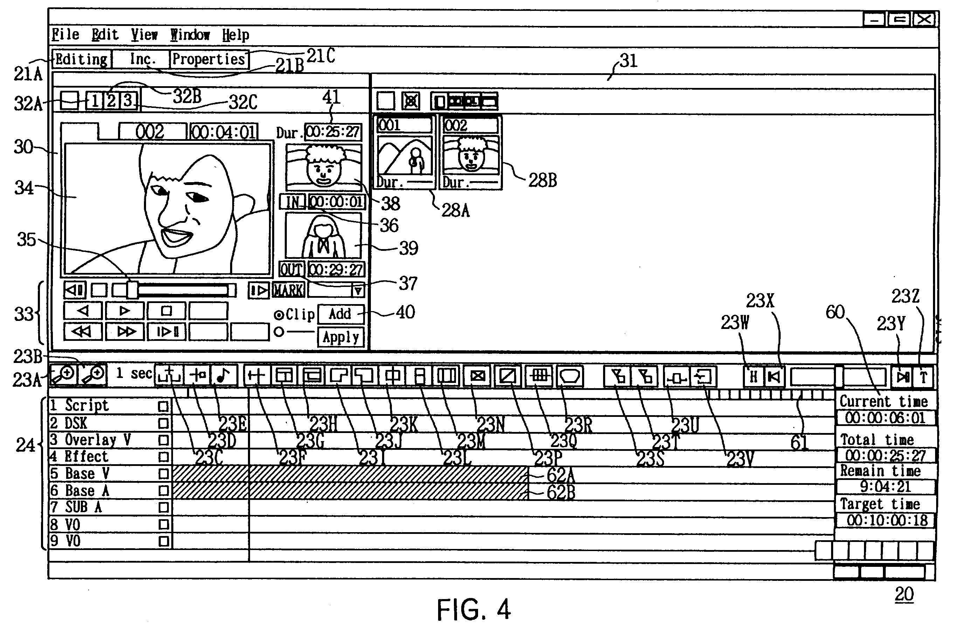

Under the condition in which this GUI screen 20 is displayed on the display 8, when an editing button "Editing" 21A on the upper part of the screen is selected by the operation of the mouse 9, the control unit 4 displays a window 30 as shown in Fig. 4 (hereinafter referred to as clip forming window) on the left side of the data display unit 22 of the GUI screen 20 in layers, and a selected material display window 31 on the right side of the data display unit 22 in layers.

In this GUI screen 20, by specifying the file name corresponding to the desired video audio material, representative images 28A and 28B of the specified video audio material are displayed on the predetermined position in the selected material display window 31.

In this case, the clip forming window 30 is a window for specifying the desired part of the video audio materials as the clip. By double clicking the desired representative images 28A and 28B out of multiple video audio materials displayed in the selected material display window 31, said representative images 28A and 28B of the image audio material can be displayed in the live video display unit 34.

Moreover, in this clip forming window 30, multiple detection selection buttons 32A ~ 32C corresponding to the types of detecting the clip are displayed on the upper left side. By selecting one of these detection selection buttons 32A ~ 32C by operation of the mouse 9, the desired clip detection method can be selected.

Then, when one of video operation buttons 33 displayed in the clip forming window 30 is selected by the mouse 9, the control unit 4 displays the motion video data $D_{JP}$ sequentially read out from the hard disc 7 in the live video display part 34 in the clip forming window 30 with the contents corresponding to the selected video operation button 33A. Also, when the slider 35 in the clip forming window 30 is operated, it displays the contents specified in the live video display part 34 in the same manner.

Thus, by clicking the button 36 for specifying the in-point or the button 37 for specifying the out-point with visually confirming the motion video displayed in the live video display part 34, the operator can specify the in-point and out-point of the video part at which he desires to register as the clip. At this point, images of the in-point and out-point specified are respectively displayed in the in-point image display unit 38 or out-point image display unit 39. Also, the length from the in-point to out-point (that is, the length of the clip) is displayed on the duration display unit 41.

Then, after the in-point and out-point are specified as described above, if the register button 40 is selected by operating the mouse 9, the control unit 4 captures the related data such as time code of the in-point and out-point of the clip displayed on the display 8, the length of material and the storage position (in the hard disc) in the internal RAM (not shown in Fig.) as database, while displaying the frame image of the in-point and out-point of the registered clip in the selected material display window 31 in addition to the representative images 28A and 28B of the original video audio materials.

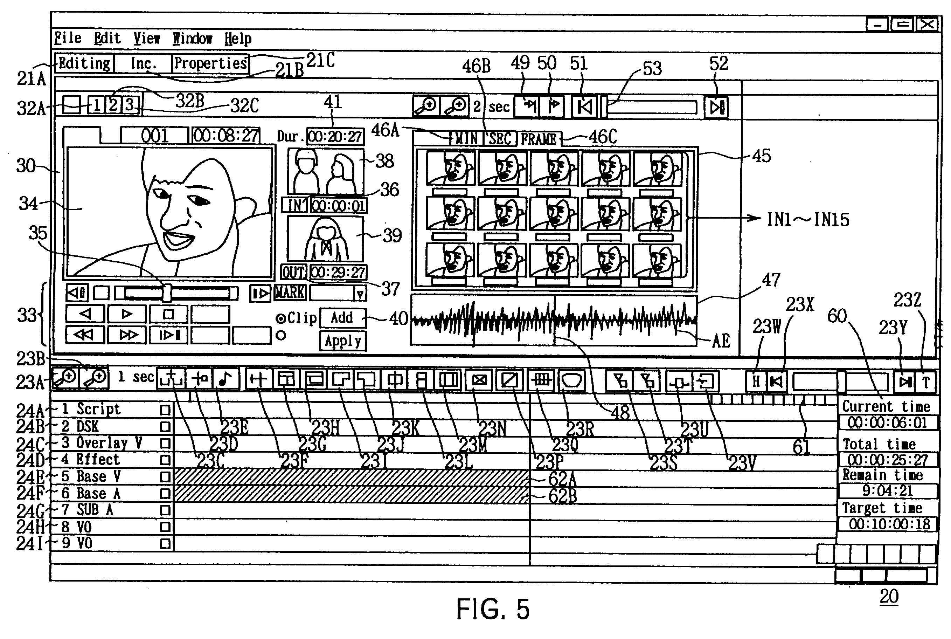

At this point, in case where the operator specifies the frame images of the in-point and out-point of the desired clip taking into consideration the sound corresponding to the time position of the frame image, the operator selects the detection select button 32B by operating the mouse 9. As a result, the control unit 4 displays a window 45 as shown in Fig. 5 (hereinafter referred to as index window) in place of the selected material display window 31 at the right side of the information display unit 22.

In the center of this index window 45, 15 frame images, each of which is scaled down to the predetermined size are displayed as index images IN1 ~ IN15. At the same time, on the left side upper part of the index window 45, 3 tab buttons, "MIN", "SEC" and "FRAME" (hereinafter referred to as MIN tab button, SEC tab button and FRM tab button) 46A ~ 46C are displayed according to the index display method when detecting the clip.

In practice, if the MIN tab button 46A is selected firstly from the buttons 46A ~ 46C by operating the mouse 9, the control unit 4 sequentially reads out frame images per minute, i.e., per 1800 frames based on the frame image displayed on the live video display part 34 in the clip forming window 30, when reading out the motion video data $D_{JP}$ from the hard disc 7. Then, the control unit 4 scales them down to the index image respectively, and displays them on the index window 45.

Next, if SEC tab button 46B is selected by the operation of the mouse 9, the control unit 4, sequentially reads out frame images per second, i.e., per 30 frames, based on the frame image according to the selected index image from presently displayed 15 index images extracted per minute, when reading out the motion video data $D_{JP}$ from the hard disc 7. Then, the control unit 4 scales them down to the index images respectively, and displays on the index window 45.

Furthermore, if the FRM tab button 46C is selected by operating the mouse 9, the control unit 4 continuously reads out frame images based on the frame image corresponding to the selected index image from presently displayed 15 index images extracted per minute when reading out the motion video data $D_{JP}$ from the hard disc 7. Then, the control unit 4 scales them down to the index images respectively, and displays them on the index window 45.

Moreover, when the desired index image is selected from currently displayed 15 index images extracted per frame by the operation of the mouse 9, the control unit 4 displays the time position of the selected index image as the slider 48 on the center of the audio display unit 47 provided in the index window 45, and displays the sound for approximately 2 seconds around the slider 48 as the waveform AE (hereinafter referred to as audio amplitude envelope), presuming the time as the abscissas and the amplitude as the ordinates. Note that, when the slider 48 in the audio display unit 47 is operated from right to left, the control unit 4 specifies the index image corresponding to the time position shown by the slider 48 within the screen.

Moreover, on the upper center part of the index window 45, sound reproduction button for reproducing the sound for approximately 2 seconds around the time position of the selected index image (these reproduction buttons are referred to as previous sound reproduction button and next sound reproduction button) 49 and 50 are provided and the sound corresponding to said previous sound reproduction button 49 or the next sound reproduction button 50 is put out from the speaker 10 for approximately 2 seconds by operating the mouse 9.

Furthermore, on the upper right part of the index window 45, a PREV button 51 and a NEXT button 52 for displaying the same number of index images as presently-displayed 15 index images, moving backward or forward on the time axis are provided. When the PREV button or NEXT button is selected by operating the mouse 9, 15 index images are displayed in scrolling forward or backward in time. Moreover, the slider 53 is provided between the PREV button 51 and the NEXT button 52 and the index images can be specified by operating said slider 53.

On the other hand, in this GUI screen 20, when the frame images of the in-point and out-point of each clip regarding multiple video audio materials are specified and the each clip is registered, the editing list can be formed according to the method to be described below, using the time line window 60.

In this case, after moving the cursor (not shown in Fig.) onto the frame image of the in-point of the desired clip in the selected material display window 31, the operator should press the button of the mouse 9. Under this condition, the operator is to move the cursor to the desired position on the video track 24E among multiple tracks 24A ~ 24I forming the editing list forming unit 24 provided along the time scale 61, with regarding the time scale 61 as an index in the time line window 60, and release the button of the mouse 9.

As a result, in the video track 24E, regarding the position of the cursor at that time as the head, a bar 62A having the predetermined color and the length corresponding to the material length of the specified clip is shown. At the same time, if the sound is included in the video audio material that is the source of the clip, the bar 62B having the same length as the bar 62A displayed on the video track 24E is also displayed on the audio track 24F at the same position according to the time scale 61.

Then, the operator repeats the operation described above, to sequentially display the bar 62A and 62B on the video track 24E and audio track 24F continuouly from the start time code ("00.00.00:00") to the desired time code (i.e., for the length of target time) on the time scale 61.

The bar 62A and 62B are displayed on the video track 24E and the audio track 24F on the time line window 60. This means that the clip images corresponding to the bar 62A are displayed or the sound corresponding to the bar 62B is output at the time shown by the time scale 61 when the edited video and sound are output. Accordingly, with such an operation, the editing list sequentially regulating the clip video displayed as edited video or the clip sound output as the edited sound can be formed.

In case of forming the editing list, if we would like to apply the special effect processing when switching from the first clip video to the second clip video, the operator should click the special effect selection button 23P from multiple buttons 23A ~ 23T provided on the upper part of the time line window 60 for selecting various processing.

As a result, the predetermined window (not shown in Fig.), on which multiple icons showing the contents of various special effect processing (hereinafter referred to as effect icons) are displayed, can be opened. By dragging and dropping, the icon corresponding to the desired special effect processing in the window can be displayed on the predetermined position of the effect track 24D of the time line window 60.

Thus, at the joint of the images of the first and second clips, the operator can input a command to execute the special effect processing corresponding to the effect icon pasted as described above.

In this editing list forming device 1, the operator selects the desired video audio material from multiple video audio materials stored in the hard disc device and can form the clip specifying the in-point and out-point, so as to form the editing list based on the specified clip.

(3) Clip Set Processing Procedure (RT1)

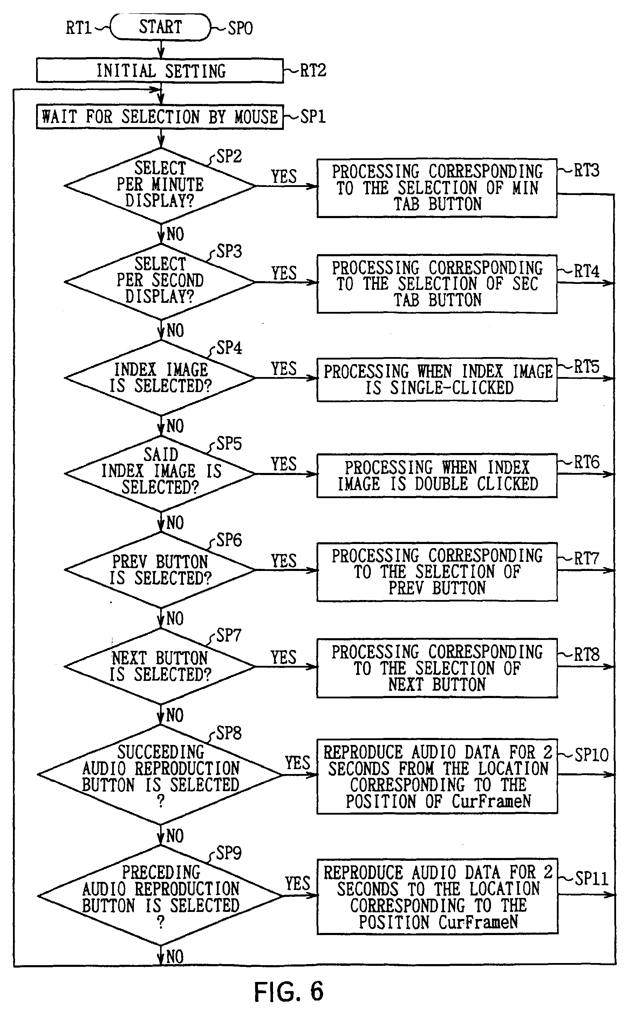

When the index window 45 is displayed on the GUI screen 20, the control unit 4 executes the clip specification processing procedure RT1 shown in Fig. 6 in order to determine the in-point and out-point of the clip which the operator desired.

The control unit 4 enters into the clip specification processing procedure RT1 that is the main routine from the step SP0, and initializes the index window 45 by executing the following sub-routine RT2. In this case, the control unit 4 initializes all variable numbers that can be set in the index window 45. At the same time, the control unit 4 displays the audio amplitude envelope AE showing the sound for approximately for 2 seconds around the time position of the index image in the audio display unit 47, regarding the currently-displayed index image at the head position as the selected index image.

Then, the control unit 4 waits till the operator operates the mouse 9 at the step SP1. At the step SP2, the control unit 4 judges whether MIN tab button 46A is selected or not. If an affirmative result is obtained, the control unit 4 proceeds to the sub-routine RT3, and displays the index image extracted per minute corresponding to the MIN tab button 46A in the index window 45.

On the other hand, when a negative result is obtained at the step SP2, the control unit 4 proceeds to the step SP3, and judges whether the SEC tab button 46B is selected or not. At the step SP3, if an affirmative result is obtained, the control unit 4 proceeds to the sub-routine RT4, and displays the index image extracted per second in response to the SEC tab button 46C in the index window 45. On the other hand, the case where negative result is obtained means that FRM tab button 46C is selected. In this case, the control unit 4 proceeds to the step SP4 and judges whether an index image out of 15 index images is single-clicked by operating the mouse 9 or not.

At this step SP4, the case when an affirmative result is obtained, means that said index image is selected. In this case, the control unit 4 proceeds to the sub-routine RT5 and displays the audio amplitude envelope AE showing the sound for approximately 2 seconds around the time position of the selected index image. On the other hand, if a negative result is obtained at the step SP4, the control unit 4 proceeds to the step SP5, and judges whether one index image out of 15 index images is double clicked by operating the mouse 9 or not.

Obtaining an affirmative result at this step SP5, the control unit 4 proceeds to the sub-routine RT5 and switches the display so that the double-clicked index image becomes to the head of index images extracted per minute or per second. On the other hand, if a negative result is obtained at the step SP5, the control unit 4 proceeds to the step SP6 and judges whether the PREV button 51 is selected or not.

If an affirmative result is obtained at the step SP6, the control unit 4 proceeds to the sub-routine RT7, and displays in scroll the same number of index images read out previous time in place of 15 index images displayed on the index window 45. On the other hand, if a negative result is obtained at the step SP6, the control unit 4 proceeds to the step SP7 and judges whether the NEXT button 52 is selected or not.

If an affirmative result is obtained at this step SP7, the control unit 4 proceeds to the sub-routine RT8 and displays in scroll the same number of index images read out the next time in place of 15 index images displayed on the index window. On the other hand, if a negative result is obtained, the control unit 4 proceeds to the step SP8, and judges whether the next audio reproduction button 50 is selected or not.

At this step SP8, if an affirmative result is obtained, the control unit 4 proceeds to the step SP10 and after outputting the sound for approximately 2 seconds after the time position of the index image currently being selected via the speaker, and returns to the step SP1. On the other hand, if a negative result is obtained at the step SP8, the control unit 4 proceeds to the step SP9, and judges whether the previous audio reproduction button 49 is selected or not.

If an affirmative result is obtained at this step SP9, the control unit 4 proceeding to the step SP11, outputs the sound for approximately 2 seconds before the time position of the index image currently selected via the speaker. On the other hand, if a negative result is obtained at the step SP9, this means that the operator has not operated the mouse 9 and nothing displayed in the index window 45, the control unit 4 returns to the step SP1 and repeats the same processing as described above.

Moreover, the control unit 4 executes the predetermined processing at the sub-routines RT3 ~ RT8, returns to the step SP1 and repeats the same processing as described above.

According to the embodiment of the present invention, in the sub-routine RT2 ~ RT8 forming the clip setting processing RT1, the control unit 4 executes the processing to be described in the following paragraphs.

(3-1) Initial Setting Processing (RT2)

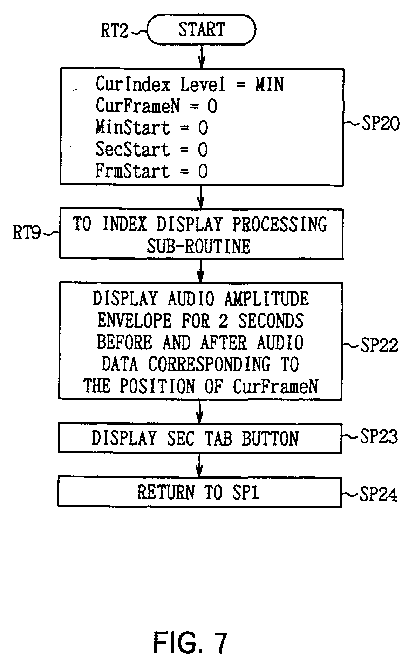

Entering into the initial setting processing subroutine RT2 of Fig. 6, the control unit 4, sets the level of time hierarchy of currently displayed 15 index images per minute (i.e., CurIndexLevel = MIN) at the step SP20 as shown in Fig. 7. The control unit 4 also sets the index image positioned at the head of said 15 index images to the frame number 0 (i.e., CurFrameN = 0) as the presently selected index image. Moreover, the control unit 4 sets the start frame number allocated to the index image of the top position per minute, per second and per frame to 0 respectively (i.e., MinStart = 0, Sec-Start = 0, FrmStart = 0).

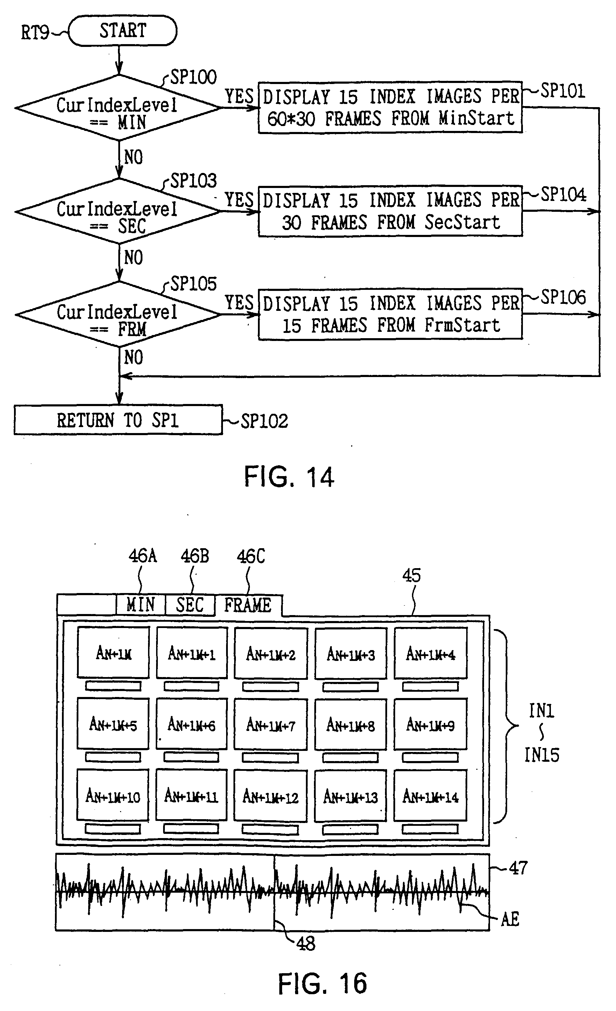

Then, the control unit 4 proceeds to the index display processing sub-routine RT9 to be described below (Fig. 14) and displays the frame images sequentially read out per 1800 frames based on the start frame image (Minstart) upon scaling these down as the index image. Also, the control unit 4 displays the audio amplitude envelope AE comprising sounds for 2 seconds around the time position of the desired index image (CurFrameN) selected by the operator on the audio display unit 47. In this case, the audio level for previous 2 seconds is 0. Then, the control unit 4 displays SEC tab button 46B and FRM tab button 46C at the step SP23, proceeds to the step SP24, and returns to the main routine RT1 shown in Fig. 6.

Accordingly, the control unit 4 can initialize all display conditions in the index window 45 of the GUI screen 20.

(3-2) Selection of MIN Tab Button (FT3)

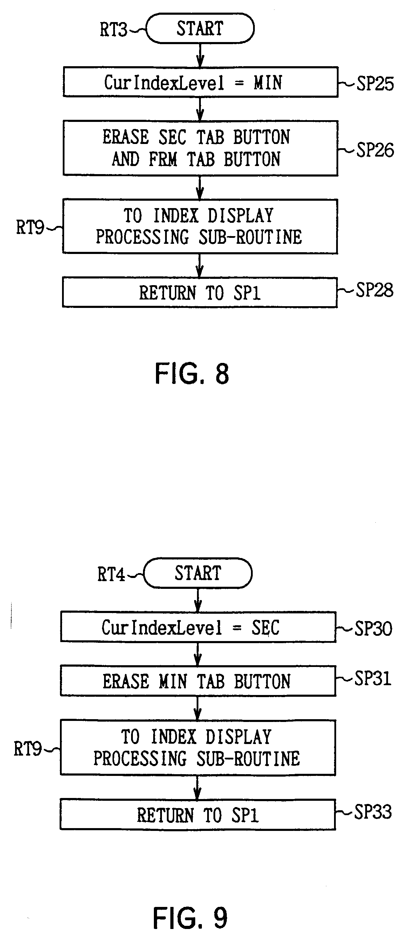

When the MIN tab button 46A is selected according to the operator's operating the mouse 9, the control unit 4 enters to the MIN tab setting processing routine RT3 shown in Fig. 8. Firstly, at the step SP25, the control unit 4, sets the levels of time hierarchy of 15 index images read out from the hard disc 7 per minute, proceeds to the step SP26, and erases the SEC tab button 46B and FRM tab button 46C. Then, the control unit 4 proceeds to the index display processing sub-routine RT9 (Fig. 14) to be described later, and displays frame images read out sequentially per 1800 frames as index images. Entering into the step SP28, the control unit 4 returns to the step SP1 of the main routine RT1 shown in Fig. 6.

Accordingly, the index images extracted per minute according to the MIN tab button 46A can be displayed respectively

(3-3) Selection of SEC Tab Button (RT4)

When the SEC tab button 46B is selected according to the operator's operation of the mouse 9, the control unit 4 enters into the SEC tab setting processing routine RT4 shown in Fig. 9. Firstly, at the step SP30, the control unit 4 sets the levels of time hierarchy of 15 index images read out from the hard disc device per second, proceeds to the step SP31, and erases the MIN tab button 46A. Then, the control unit 4, proceeds to the index display processing sub-routine RT9 (Fig. 14) to be described later, and displays frame images read out per 30 frames as index images. Then, proceeding to the step SP33, the control unit 4 returns to the step SP1 of the main routine RT1 shown in Fig. 6.

Thus, the index images extracted per second in response to the SEC tab button 46B can be displayed respectively.

(3-4) Selection of Index Image (RT5)

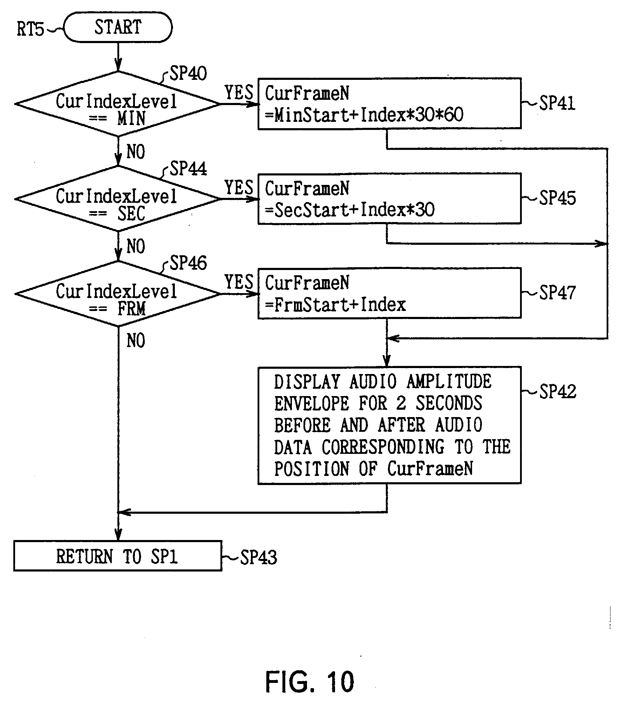

When the desired index image is single-clicked according to the operator's operation of the mouse 9, the control unit 4 enters into the index image selection processing RT5 shown in Fig. 10. Firstly, at the step SP40, the control unit 4 judges whether the levels of time hierarchy of 15 index images currently displayed are set per minute or not. If an affirmative result is obtained, the control unit 4 proceeds to the step SP41. At this step SP41, supposing that the sequence number of said selected index image to be "Index" among sequence numbers (1 ~ 15) allocated to 15 index images, the control unit 4 calculates the frame number (CurFrameN) of said selected index image as the following equation (1):

$$CurFrameN = Minstart + Index \times 30 \times 60 \qquad (1)$$

Then, the control unit 4 displays sounds for around 2 seconds corresponding to the time position of the index image selected at the step SP42, proceeds to the step SP43, and returns to the step SP1 of the main routine RT1 shown in Fig. 6.

[ On the other hand, if a negative result is obtained at the step SP40, the control unit 4 proceeds to the step SP44 and judges whether the levels of time hierarchy of 15 index images currently displayed are set per second or not. If an affirmative result is obtained at this step SP44, the control unit 4 proceeds to the step SP45 and calculates the frame number of said selected index image as the following equation (2):

$$CurFrameN = SecStart + Index \times 30 \qquad (2)$$

Then, the control unit 4 proceeds to the step SP42 and displays the audio amplitude envelope AE on the audio display unit 47 in the same manner as above. Then, the control unit 4 proceeds to the step SP43 and returns to the step SP1 of the main routine RT1 as shown in Fig. 6.

On the other hand, if a negative result is obtained at the step SP44, the control unit 4 proceeds to the step SP46 and judges whether the levels of time hierarchy of 15 index images currently displayed are set per frame or not. If an affirmative result is obtained at this step SP46, the control unit 4 proceeds to the step SP47, and calculates the frame number of said selected index image as the following equation (3):

$$CurFrameN = FrmStart + Index \qquad (3)$$

Then, the control unit 4 proceeds to the step SP42 and displays the audio amplitude envelope AE on the audio display unit 47 in the same manner as described above. Then, the control unit 4 proceeds to the step SP43 and returns to the step SP1 of the main routine RT1 as shown in Fig. 6. On the other hand, if a negative result is obtained at the step SP46, the control unit 4 proceeds to the step SP43 and returns to the step SP1 of the main routine RT1 shown as in Fig. 6.

Thus, in each level of the time hierarchy, the frame number which the operator desired and selected index image can be specified. The audio amplitude envelope AE corresponding to the desired index image can be displayed in the audio display unit 47.

(3-5) Index Image Setting (RT6)

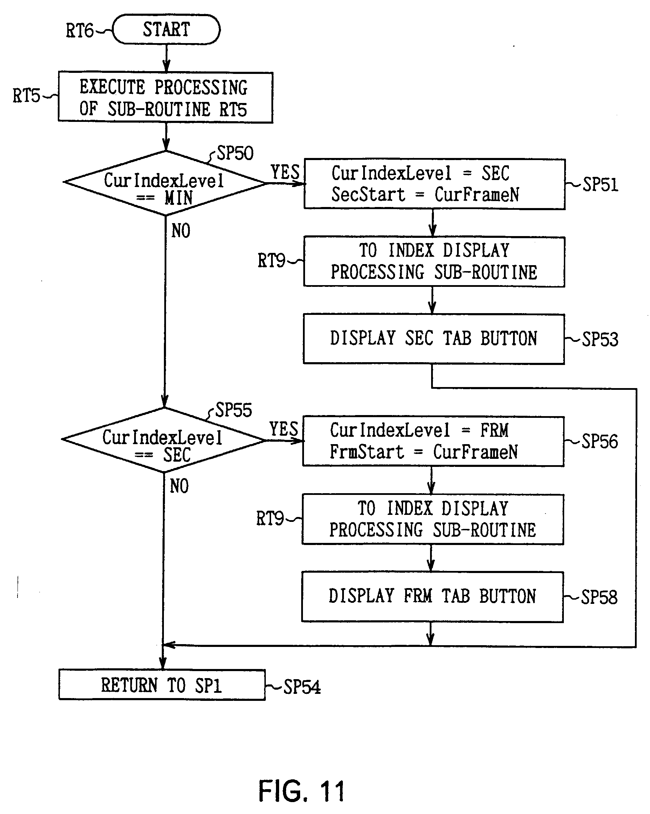

When the desired index image is double-clicked by the operator's operation of the mouse 9, the control unit 4 enters into the index image setting processing procedure RT6 as shown in Fig. 11. Firstly, the control unit 4 processes the sub-routine RT5 described above, and proceeds to the step SP50. Further, the control unit 4 judges whether the levels of time hierarchy of currently-displayed 15 index images are set per minute or not. If an affirmative result is obtained at this step SP50, the control unit 4 proceeds to the step SP51 and sets the levels of time hierarchy of 15 index images to lower level per second. Then, the control unit 4 adjusts the frame number of the index image in order to display the index image which has been already selected at the head position.

The control unit 4 proceeds to the index display processing sub-routine RT9 (Fig. 14) and scales down the frame images read out sequentially per 30 frames. The resultants are displayed as index images and at the following step SP53, the control unit 4 displays the SEC tab button 46B, and proceeds to the step SP54.

On the other hand, if a negative result is obtained at the step SP50, the control unit 4 proceeds to the step SP55 and judges whether the levels of time hierarchy of 15 index images which are currently displayed are set per minute or not. If an affirmative result is obtained at this step SP55, the control unit 4 proceeds to the step SP56, and sets the levels of time hierarchy of 15 index images per frame. Then, the control unit 4 adjusts the frame number of said index image in order to display already-selected index image at the top position.

The control unit 4 proceeds to the index display processing sub-routine RT9 (Fig. 14) to be described below. After reading out frame images continuously, the control unit 4 scales down these and displays as the index images. At the following step SP58, after displaying FRM tab button 46C, the control unit 4 proceeds to the step SP54. At this step SP54, the control unit 4 returns to the step SP1 of the main routine RT1.

Accordingly, in each level of the time hierarchy, concerning the index image double-clicked by the operator, the index image selected by the time of single-clicking can be displayed on the head. Also, the other index images can be sequentially displayed at the desired level of the time hierarchy based on the selected index image.

(3-6) Scroll Processing to Previous Time Point (RT7)

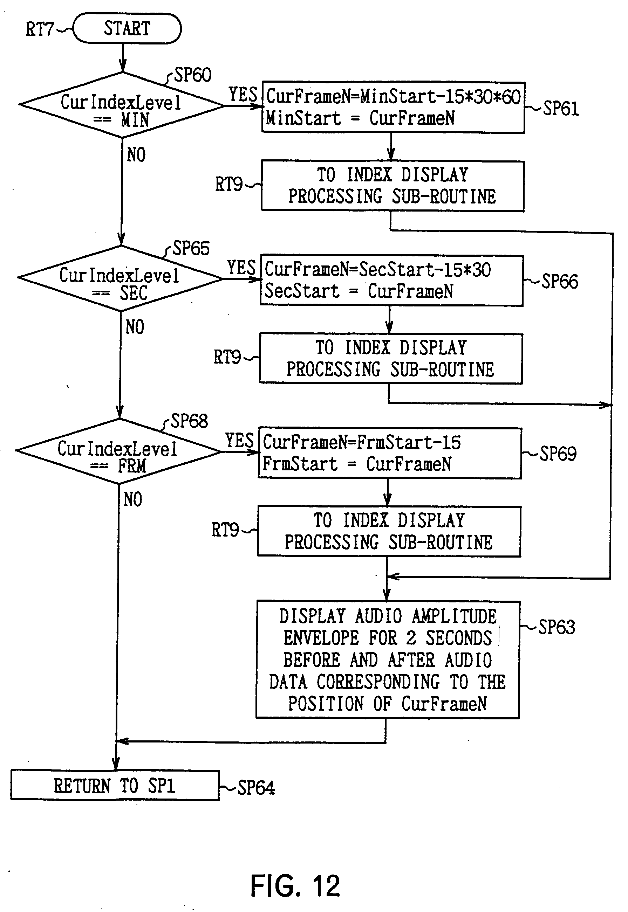

When the PREV button 51 is selected by the operation of the mouse 9 by the operator, the control unit 4 enters into the previous stage scroll processing procedure RT7 shown in Fig. 12. Firstly, at the step SP60, the control unit 4 judges whether the levels of time hierarchy of 15 index images which are currently displayed are set per minute or not. If an affirmative result is obtained at this step SP60, the control unit 4 proceeds to the step SP61 and conducts the calculation on the selected index image (CurFrameN) displayed on the top position as the following equation (4):

$$CurFrameN = Minstart - 15 \times 30 \times 60 \qquad (4)$$

Provided:    Minstart = CrFrameN

The control unit 4 reads out the frame image with the frame number of 15 frames prior to the selected index image, scales this down, and displays on the top position as the index image.

Then, the control unit 4 proceeds to the index display processing sub-routine RT9 (Fig. 14). After scaling down frame images read out sequentially per 1800 frames based on the index image displayed on the top position, the control unit 4 displays the resultant as the index images. Then, the control unit 4 displays sounds for 2 seconds around the time position of the index image displayed on the top position on the audio display unit 47 as the audio amplitude envelope AE and proceeds to the step SP64.

On the other hand, if a negative result is obtained at the step SP60, the control unit 4 proceeds to the step SP65, and judges whether the levels of time hierarchy of 15 index images currently displayed are set per second or not. If an affirmative result is obtained at this step SP65, the control unit 4 proceeds to the step SP66, and conducts the following calculation on the selected index image displayed on the top position as the following equation (5):

$$CurFrameN = SecStart - 15 \times 30 \qquad (5)$$

Provided:    SecStart = CurFrame

Then, the control unit 4 reads out the frame image with the frame number 15 frames prior to the selected index image, scales this down, and displays this on the top position as the index image.

Then, the control unit 4 proceeds to the index display processing sub-routine RT9 (Fig. 14) to be described later. After scaling down frame images sequentially read out per 30 frames, the control unit 4 displays the resultants as index images. Then, the control unit 4 displays sounds for 2 seconds around the time position of index image displayed on the top position on the audio display unit 47 as the audio amplitude envelope AE, and proceeds to the step SP64.

On the other hand, if a negative result is obtained at the step SP65, the control unit 4 proceeds to the step SP68, and judges whether the levels of the time hierarchy of 15 index images which are currently displayed are set per frame or not. If an affirmative result is obtained at this step SP68, the control unit 4 proceeds to the step SP69, and conducts the following calculation on the selected index image displayed on the top position as the following equation (6):

$$CurFrameN = FrmStart - 15 \qquad (6)$$

Provided:    FrmStart = CurFrame

Then, the control unit 4 reads out frame image having the frame number 15 frames prior to the selected index image. After scaling this down, the control unit 4 displays as an index image on the top position.

Then, the control unit 4 proceeds to the index display processing sub-routine RT9 (Fig. 14) to be described later. Based on the index image displayed on the top position, the control unit 4 scales down the frame images continuously read out, and displays the resultant as index images. After displaying sounds for 2 seconds around the time position of the index image displayed on the top position on the audio display unit 47 as the audio amplitude envelope AE, the control unit 4 proceeds to the step SP64. At this step SP64, the control unit 4 returns to the step SP1 of the main routine RT1 as shown in Fig. 6.

Thus, when the operator operates the PREV button 51, the currently displayed 15 index images can be scrolled and the index images of the previous 15 frames can be displayed regardless of the level of time hierarchy.

(3-7) Scroll Processing to Next Time Point (RT8)

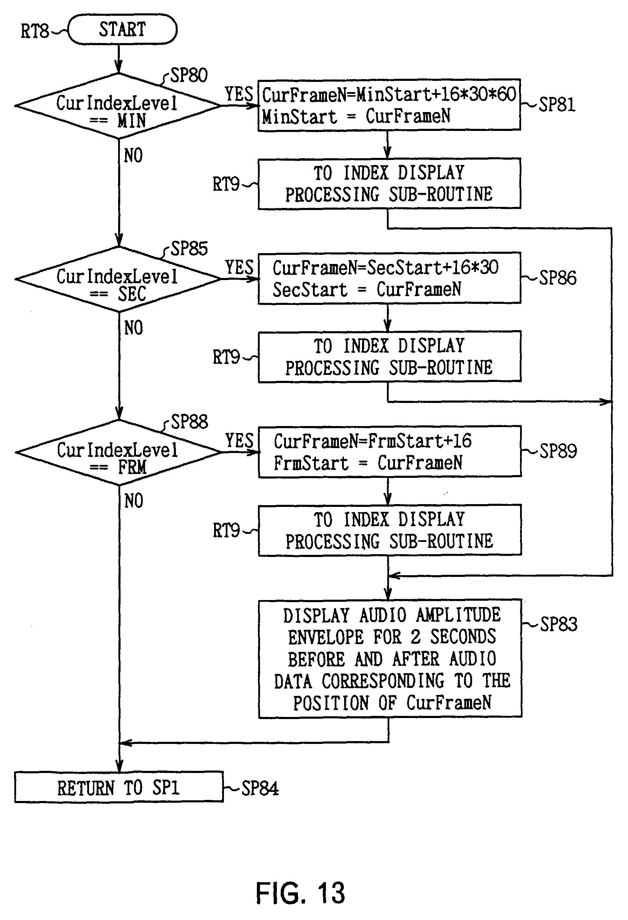

When the NEXT button 52 is selected by the operation of the mouse 9 by the operator, the control unit 4 enters into the latter stage of scroll processing procedure RT8 shown in Fig. 13. At the step SP80, the control unit 4 judges whether the levels of time hierarchy of 15 index images currently displayed are set per minute or not. If an affirmative result is obtained at the step SP80, the control unit 4 proceeds to the step SP81, and conducts the following calculation on the selected index image (CurFrameN) displayed on the top position as the following equation (7):

$$CurFrameN = Minstart + 15 \times 0 \times 60 \qquad (7)$$

Provided:    Minstart = CurFrameN

By calculating the above EQUATION, the control unit 4 reads out the frame image having the frame number of the post 15 frames of the selected index image. After scaling this down, the control unit 4 displays the resultant as the index image on the top position.

Then, the control unit 4 proceeds to the index display processing sub-routine RT9 (Fig. 14) to be described below. After scaling down frame images successively read out per 1800 frames, the control unit 4 displays the resultants as the index images, displays the sound approximately for 2 seconds around the time position of index image displayed on the top position, and proceeds to the step SP64.

On the other hand, if a negative result is obtained at the step SP80, the control unit 4 proceeds to the step SP85, and judges whether the levels of time hierarchy of 15 index images currently displayed are set per second or not. If an affirmative result is obtained at this step SP85, the control unit 4 proceeds to the step SP86 and conducts the following calculation on the selected index image displayed on the top position as the following equation (8):

$$CurFrameN = SecStart + 15 \times 30 \qquad (8)$$

Provided: SecStart = CurFrame

By calculating the above formula, the control unit 4 reads out the frame image having the frame number of the post 15 frames of the selected index image. After scaling this down, the control unit 4 displays on the top position as the index image.

Then, the control unit 4 proceeds to the index display processing sub-routine RT9 (Fig. 14), and scales down the frame images successively read out per 30 frames based on the index image displayed on the top position. Then, the control unit 4 displays the resultant as the index images, and displays sounds for 2 seconds around corresponding to the time position of index image displayed on the top position on the audio display unit 47 as the audio amplitude envelope AE. Then, the control unit 4 proceeds to the step SP84.

On the other hand, if a negative result is obtained at the step SP85, the control unit 4 proceeds to the step SP88, and judges whether the levels of time hierarchy of 15 index images currently displayed are set per frame or not. If an affirmative result is obtained at this step SP88, the control unit 4 proceeds to the step SP89, and conducts the following calculation on the selected index image displayed on the top positiona as the following equation (9):

$$CurFrameN = FrmStart + 15 \qquad (9)$$

Provided: FrmStart = CurFrame

By calculating the above formula, the control unit 4 reads out the frame image having the frame number 15 frames after the selected index image. After scaling this down, the control unit 4 displays on the top position as the index image.

Then, the control unit 4 proceeds to the index display processing sub-routine RT9 (Fig. 14) to be described below and scales down the frame images which are continuously read out based on the index image displayed on the top position. Then, the control unit 4 displays the resultant as the index image. After displaying sounds for 2 seconds around corresponding to the time position of index image displayed on the top position on the audio display unit 47 as the audio amplitude envelope AE, the control unit 4 proceeds to the step SP84. At the step SP84, the control unit 4 returns to the step SP1 of the main routine RT1 as shown in Fig. 6.

Thus, when the operator operates the NEXT button 52, the index images of the post 15 frames from the currently displayed images can be scrolled and displayed regardless of the level of time hierarchy.

(3-8) Index Display Processing (RT9)

When the control unit 4 enters into the index display processing sub-routine RT9 of Figs. 7 ~ 9, Figs. 11 ~ 13, as shown in Fig. 14, firstly at the step SP100, it judges whether the levels of time hierarchy of 15 index images currently displayed are set per minute or not. If an affirmative result is obtained, the control unit 4 proceeds to the step SP101, and scales down the frame images successively read out per 1800 frames based on the start frame image (MinStart) respectively. Then, the control unit 4 displays the resultants as the index images, proceeds to the step SP102, and returns to the step SP1 of the maid routine RT1 shown in Fig. 6.

On the other hand, if a negative result is obtained at the step SP100, the control unit 4 proceeds to the step SP103, and judges whether the levels of time hierarchy of 15 index images currently displayed are set per second or not. If an affirmative result is obtained at this step SP103, the control unit 4 proceeds to the step SP104. After scaling down frame images read out per 30 frames continuously on the basis of start frame image (SecStart) and displaying the resultant as index images, the control unit 4 proceeds to the step SP102 and returns to the step SP1 of the main routine RT1 as shown in Fig. 6.

On the other hand, if a negative result is obtained at the step SP103, the control unit 4, proceeds to the step SP105, judges whether the level of time hierarchy of 15 index images currently displayed is set per frame or not. If an affirmative result is obtained at this step SP105, the control unit proceeds to the step SP106. And after scaling down the frame images read out continuously per frame based on the start frame image (PrmStart) and displaying these as index images, the control unit 4 proceeds to the step SP102 and returns to the step SP1 of the main routine RT1 as shown in Fig. 6.

(4) Operation and Effects of the Embodiment

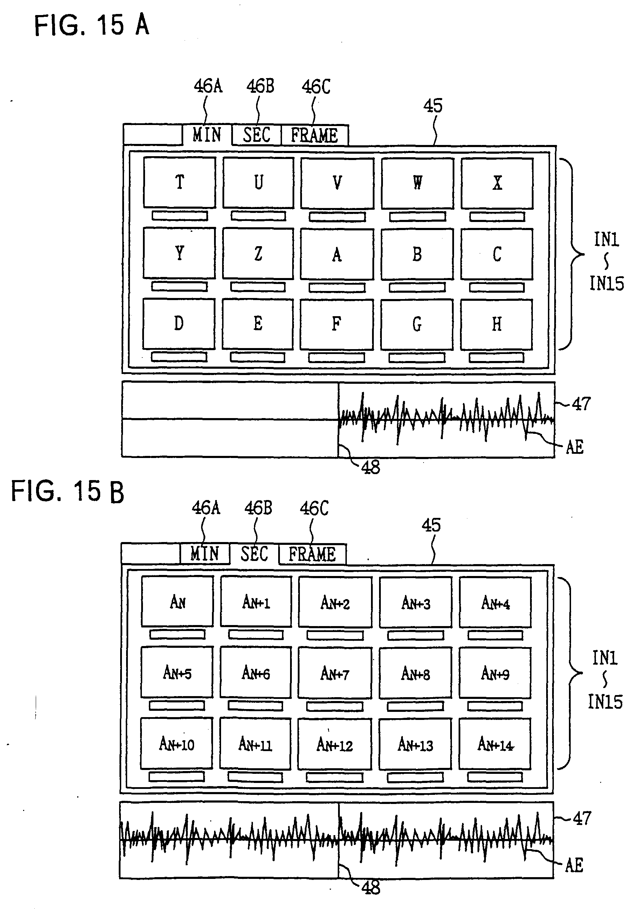

According to the foregoing configuration, in this editing device 1, when the detection selection button 32B displayed on the clip forming window 30 of the data display unit 22 of the GUI screen 20 is clicked, the index window 45 shown in Fig. 5 is opened. When the MIN tab button 46A of the index window 45 is selected, frame images are read out continuously per one minute, that is per 1800 frames, and displayed as 15 index images IN1 ~ IN15 ("T", "U", ... ... "G", "H") (Fig. 15 (A)) with scaled down.

When the desired index image "A" selected from index images extracted per minute is clicked, audio amplitude envelope AE for 2 seconds around the time position of said index image "A" is displayed on the audio display unit 47 displayed in the index window 45. Clicked once more (i.e., double-clicked), the selected index image "A" is fit to the top position and frame images which are read out sequentially per second, i.e., per 30 frames, based on the index image "A" are scaled down and displayed as index images IN1 ~ IN15 ("$A_{N+1}$", "$A_{N+1}$", ... ..., "$A_{N+1}$", "$A_{N+1}$") (Fig. 15B).

When the desired index image ("$A_{N+1}$") selected from index images extracted per second is clicked, audio amplitude envelope AE for 2 seconds around the time position of the index image is displayed on the audio display unit 47. Clicked once more, said selected index image is fit to the top position and frame images read out continuously per frame based on said index image are scaled down and displayed as index images IN1 ~ IN15 ("$A_{N+1M}$", "$A_{N+1M+1}$", ... ..., "$A_{N+1M+13}$", "$A_{N+1M+14}$")(Fig. 16)

When the desired index image selected from the 15 index images is clicked, the audio amplitude envelope AE for 2 seconds around said index image is displayed on the audio display unit 47.

Accordingly, in this editing device 1, the operation for selecting the frame image of the start time when sound is generated and the frame image of the end time as the in-point and out-point of the clip respectively can be conducted by visually confirming the audio amplitude envelope AE displayed on the audio display unit 47. Thus, this operation can be conducted in a shorter period of time than in case where the operator conducting this type of work by actually listening to sounds.

Furthermore, in this editing device 1, 15 index images are displayed hierarchically along the time axis by the operator's selection. Thus, the desired frame image can be selected more easily and in a shorter period of time than in case of searching images successively from the beginning, and the space on the GUI screen 20 can be more effectively utilized.

According to the foregoing configuration, 15 index images are set and displayed at the desired time hierarchy level by the operator's selection and the sound corresponding to the desired index image is displayed as the audio amplitude envelope AE. Thus, the work can be done in a shorter period of time than in case where the operator actually conducts the selection of frame images by listening to the sounds. Thereby, the editing device capable of remarkably improving the operational efficiency of the editing work can be realized.

(5) Other Embodiments

The embodiment described above has dealt with the case of applying the image searching device and the image searching method according to the present invention to the editing device 1 constructed as shown in Fig. 1. It may be also applied to the editing device capable of searching the desired frame image from a sequence of multiple frame images for example. However, the invention is not limited to those examples of its application.

Furthermore, the embodiment described above has dealt with the case of applying the control unit 4 as the extracting means for sequentially extracting frame images from multiple frame images at the established intervals (time hierarchy setting level). However, the present invention is not limited to this. It can be applied to the other various constructions.

Furthermore, the embodiment described above has dealt with the case of applying the control unit 4 as the display control means for displaying index images IN1 ~ IN15 which are obtained after each frame image is scaled down as the display means. However, the present invention is not limited to this . It can be applied to various constructions. In such cases, the number of index images IN1 ~ IN15 to be displayed on the display 8 is not only limited to 15 but also an optional number of index images, such as less than 14 or more than 16, can be displayed.

Moreover, the embodiment described above has dealt with the case of applying the control unit 4 as the interval setting means to set the time hierarchy level of multiple frame images as the extracting intervals according to the external operation using such as the mouse 9. However, the present invention is not limited to this. The time hierarchy level can be set per any optional time unit other than per minute, per second or per frame.

Further, the embodiment described above has dealt with the case of applying the control unit 4 as the audio display means for displaying the audio amplitude envelope AE on the selected frame image on the audio display unit 47 on the display 8. However, the present invention is not limited to this. Other various constructions can be also applied to.

According to the embodiments of the invention as described above, since in the image searching device and the image searching method for searching the desired frame image from a sequence of multiple frame images, frame images are sequentially extracted at the established extracting intervals from multiple frame images using the extracting means. After scaling down each frame image extracted, the resultant of each index image is displayed on the display means by the display control means. Simultaneously the extracting intervals are set by the interval setting means according to the external operation, the desired index image can be selected from multiple index images displayed on the display means easily and in a short period of time. Thereby, the image searching device and the image searching method capable of improving remarkably the operational efficiency of the editing work can be realized.

Furthermore, according to embodiments of the present invention, in the image searching device and the image searching method for searching the desired frame image from a sequence of multiple frame images, regarding the audio data allocated to multiple frame images respectively, the amplitude of audio data corresponding to the frame image selected according to the external operation is to be displayed on the display means by the audio display means. Thus, the search of said frame image can be conducted in visually confirming the amplitude of audio data corresponding to the desired frame image displayed on the display means. Thereby, the image searching device and the image searching method capable of remarkably improving the operational efficiency of the editing work can be realized.

It will be obvious to those skilled in the art that various changes and modifications may be made to the above described embodiments as fall within the true spirit and scope of the present invention.

## Claims

1. An image searching device for searching desired frame image from a sequence of multiple frame images, comprising:

   extracting means for extracting said frame images at established extracting interval from said multiple frame images;
   display control means for scaling down said frame image an extracted and displaying each index image obtained on the display means; and
   interval setting means for setting said extracting intervals according to an external operation.

2. The image searching device according to Claim 1, wherein:

   said interval setting means sets said extracting intervals per each reproduction unit, i.e., per minute, per second or per frame, for reproducing said frame image.

3. The image searching device according to Claim 1, further comprising:

   audio display means for displaying the amplitude of said audio data corresponding to said frame image selected according to the external operation regarding audio data allocated respectively to said multiple frame images.

4. The image searching device according to Claim 3, wherein:

   said audio display means
   set the time position of said selected frame image and the time position of at least more than one of said frame images preceding and/or succeeding said selected frame image on the predetermined time axis; and
   based on said time position of said selected frame image, display the amplitude of said audio data corresponding to each of said frame images on the corresponding time position.

5. The image searching device according to Claim 4, wherein:

   said audio display means specifies said frame image corresponding to said time position by moving a slider provided flexible in the direction of said time axis to the desired time position on the time axis according to the external operation; and
   said display control means displays said frame image specified by said audio display means on the display means as said index image.

6. The image searching device according to Claim 4, wherein:

   said audio display means specifies said frame image corresponding to said time position as in-point or out-point of the clip by moving the slider provided flexible in the direction of time axis to the desired time position on said time axis according to the external operation.

7. The image searching device according to claim 1, further comprising:

   audio display means for displaying the amplitude of said audio data corresponding to said frame image selected according to the external operation regarding the audio data allocated respectively to said multiple frame images.

8. An image searching device according to Claim 7, wherein:

   said audio display means comprises the steps of

   setting the time position of said selected frame image on the predetermined time axis and the time position of at least more than one of said frame images preceding or succeeding said selected frame image; and

displaying the amplitude of said audio data corresponding to each of said frame images on the corresponding time position.

9. The image searching device according to Claim 8, wherein:

said audio display means specifies said frame image corresponding to said time position by moving a slider provided flexible in the direction of said time axis to the desired time position on said time axis according to an external operation; and said display control means displays said frame image specified by said audio display means on said display means as said index image.

10. An image searching method for searching a desired frame image from a sequence of multiple frame images, comprising:

a first step of sequentially extracting a frame image from said multiple frame images at an established extracting intervals; a second step of scaling down each of said extracted frame images and displaying each index image obtained on the display means; and a third step of setting said extracting intervals according to an external operation.

11. The image searching method according to Claim 10, wherein:

said third step sets said extracting intervals per each reproduction unit, i.e., per minute, per second or per frame.

12. The image searching method according to Claim 10, comprising:

a fourth step of displaying the amplitude of said audio data corresponding to said frame image selected according to the external operation regarding the audio data allocated respectively to multiple frame images.

13. The image searching method according to Claim 12, wherein: said fourth step:

sets the time position of said frame image selected and the time position of at least more than one of said frame images preceding and/or succeeding said selected frame image on the predetermined time axis; and displays the amplitude of said audio data corresponding to each frame image on the pertinent time position based on said time position of the selected frame image.

14. The image searching method according to Claim 13, wherein:

said fourth step specifies the frame image corresponding to said time position by moving a slider provided flexible in the direction of time axis to said desired time position on the time axis according to an external operation; and said second step displays said frame image specified on the display means as the index image.

15. The image searching method according to Claim 13, wherein:

said fourth step specifies said frame image corresponding to said time position as the in-point or out-point of the clip respectively by moving a slider provided flexible in the direction of time axis onto the desired time position on the time axis according to an external operation.

16. An image searching method for searching a desired frame image from a sequence of multiple frame images, wherein:

regarding the audio data allocated respectively to said multiple frame images, the amplitude of said audio data corresponding to said frame image selected according to an external operation is displayed on the display means.

17. The image searching method according to Claim 16, wherein:

the time position of said selected frame image and the time position of at least more than one of said frame images preceding and/or succeeding said selected frame image are set on a predetermined time axis; and the amplitude of said audio data corresponding to each said frame image is displayed on the corresponding time position based on the time position of said selected frame image.

18. The image searching method according to Claim 16, wherein:

by moving a slider provided flexible in the direction of said time axis to the desired time position on the time axis according to an external operation, said frame image corresponding to said time position is specified; and

said frame image specified is displayed on the display means as the index image.

FIG. 1

FIG. 2 A   MOTION VIDEO FILE

FIG. 2 B   AUDIO FILE

EP 0 945 862 A2

FIG. 3

EP 0 945 862 A2

File Edit View Window Help

Editing | Inc. | Properties

21A 21B 21C 31

32A 32B 32C 41

002 00:04:01 Dur. 00:25:27

001 002

Dur. Dur.

28B 28A

IN. 00:00:01 38

36

OUT 00:29:27 39

37

MARK 40

Clip Add

Apply

23X 23Z
23W 60 23Y

H K T

1 Script
2 DSK
3 Overlay V 23E 23H 23K 23N 23R 23U
4 Effect 23D 23G 23J 23M 23Q 23T 61
5 Base V 23C 23F 23I 23L 23P 23S 23V
6 Base A 62A
7 SUB A 62B
8 VO
9 VO

1 sec

Current time
00:00:06:01
Total time
00:00:25:27
Remain time
9:04:21
Target time
00:10:00:18

FIG. 4

20

FIG. 5

EP 0 945 862 A2

RT1 — ( START ) — SP0

INITIAL SETTING — RT2

WAIT FOR SELECTION BY MOUSE — SP1

SP2 SELECT PER MINUTE DISPLAY? — YES → PROCESSING CORRESPONDING TO THE SELECTION OF MIN TAB BUTTON — RT3

NO ↓

SP3 SELECT PER SECOND DISPLAY? — YES → PROCESSING CORRESPONDING TO THE SELECTION OF SEC TAB BUTTON — RT4

NO ↓

SP4 INDEX IMAGE IS SELECTED? — YES → PROCESSING WHEN INDEX IMAGE IS SINGLE-CLICKED — RT5

NO ↓

SP5 SAID INDEX IMAGE IS SELECTED? — YES → PROCESSING WHEN INDEX IMAGE IS DOUBLE CLICKED — RT6

NO ↓

SP6 PREV BUTTON IS SELECTED? — YES → PROCESSING CORRESPONDING TO THE SELECTION OF PREV BUTTON — RT7

NO ↓

SP7 NEXT BUTTON IS SELECTED? — YES → PROCESSING CORRESPONDING TO THE SELECTION OF NEXT BUTTON — RT8

NO ↓

SP8 SUCCEEDING AUDIO REPRODUCTION BUTTON IS SELECTED? — YES → REPRODUCE AUDIO DATA FOR 2 SECONDS FROM THE LOCATION CORRESPONDING TO THE POSITION OF CurFrameN — SP10

NO ↓

SP9 PRECEDING AUDIO REPRODUCTION BUTTON IS SELECTED? — YES → REPRODUCE AUDIO DATA FOR 2 SECONDS TO THE LOCATION CORRESPONDING TO THE POSITION CurFrameN — SP11

NO ↓

FIG. 6

RT2 — ( START )

↓

SP20

CurIndex Level = MIN
CurFrameN = 0
MinStart = 0
SecStart = 0
FrmStart = 0

↓

RT9 — TO INDEX DISPLAY PROCESSING
SUB-ROUTINE

↓

DISPLAY AUDIO AMPLITUDE
ENVELOPE FOR 2 SECONDS
BEFORE AND AFTER AUDIO
DATA CORRESPONDING TO
THE POSITION OF CurFrameN    — SP22

↓

DISPLAY SEC TAB BUTTON    — SP23

↓

RETURN TO SP1    — SP24

FIG. 7

RT3 ~ ( START )

CurIndexLevel = MIN ~ SP25

ERASE SEC TAB BUTTON
AND FRM TAB BUTTON ~ SP26

RT9 ~ TO INDEX DISPLAY
PROCESSING SUB-ROUTINE

RETURN TO SP1 ~ SP28

## FIG. 8

RT4 ~ ( START )

CurIndexLevel = SEC ~ SP30

ERASE MIN TAB BUTTON ~ SP31

RT9 ~ TO INDEX DISPLAY
PROCESSING SUB-ROUTINE

RETURN TO SP1 ~ SP33

## FIG. 9

RT5 — ( START )

SP40

CurIndexLevel == MIN

YES → CurFrameN =MinStart+Index*30*60  ~SP41

↓ NO

SP44

CurIndexLevel == SEC

YES → CurFrameN =SecStart+Index*30  ~SP45

↓ NO

SP46

CurIndexLevel == FRM

YES → CurFrameN =FrmStart+Index  ~SP47

↓ NO

DISPLAY AUDIO AMPLITUDE ENVELOPE FOR 2 SECONDS BEFORE AND AFTER AUDIO DATA CORRESPONDING TO THE POSITION OF CurFrameN  ~SP42

RETURN TO SP1  ~SP43

FIG. 10

RT6 — ( START )

RT5 — EXECUTE PROCESSING
OF SUB-ROUTINE RT5

SP50
CurIndexLevel
== MIN

YES → CurIndexLevel = SEC
SecStart = CurFrameN — SP51

NO

RT9 — TO INDEX DISPLAY
PROCESSING SUB-ROUTINE

DISPLAY SEC TAB BUTTON — SP53

SP55
CurIndexLevel
== SEC

YES → CurIndexLevel = FRM
FrmStart = CurFrameN — SP56

NO

RT9 — TO INDEX DISPLAY
PROCESSING SUB-ROUTINE

DISPLAY FRM TAB BUTTON — SP58

RETURN TO SP1 — SP54

FIG. 11

RT7 ～ ( START )

CurIndexLevel == MIN — SP60

YES → CurFrameN=MinStart-15*30*60
MinStart = CurFrameN — SP61

RT9 ～ TO INDEX DISPLAY PROCESSING SUB-ROUTINE

NO

CurIndexLevel == SEC — SP65

YES → CurFrameN=SecStart-15*30
SecStart = CurFrameN — SP66

RT9 ～ TO INDEX DISPLAY PROCESSING SUB-ROUTINE

NO

CurIndexLevel == FRM — SP68

YES → CurFrameN=FrmStart-15
FrmStart = CurFrameN — SP69

RT9 ～ TO INDEX DISPLAY PROCESSING SUB-ROUTINE

NO

DISPLAY AUDIO AMPLITUDE ENVELOPE FOR 2 SECONDS BEFORE AND AFTER AUDIO DATA CORRESPONDING TO THE POSITION OF CurFrameN — SP63

RETURN TO SP1 — SP64

# FIG. 12

RT8 — START

SP80
CurIndexLevel == MIN
YES → CurFrameN=MinStart+16*30*60
MinStart = CurFrameN — SP81

NO

RT9 — TO INDEX DISPLAY PROCESSING SUB-ROUTINE

SP85
CurIndexLevel == SEC
YES → CurFrameN=SecStart+16*30
SecStart = CurFrameN — SP86

NO

RT9 — TO INDEX DISPLAY PROCESSING SUB-ROUTINE

SP88
CurIndexLevel == FRM
YES → CurFrameN=FrmStart+16
FrmStart = CurFrameN — SP89

NO

RT9 — TO INDEX DISPLAY PROCESSING SUB-ROUTINE

DISPLAY AUDIO AMPLITUDE ENVELOPE FOR 2 SECONDS BEFORE AND AFTER AUDIO DATA CORRESPONDING TO THE POSITION OF CurFrameN — SP83

RETURN TO SP1 — SP84

FIG. 13

RT9 — START

SP100
CurIndexLevel == MIN

YES → DISPLAY 15 INDEX IMAGES PER 60*30 FRAMES FROM MinStart — SP101

NO

SP103
CurIndexLevel == SEC

YES → DISPLAY 15 INDEX IMAGES PER 30 FRAMES FROM SecStart — SP104

NO

SP105
CurIndexLevel == FRM

YES → DISPLAY 15 INDEX IMAGES PER 15 FRAMES FROM FrmStart — SP106

NO

RETURN TO SP1 — SP102

## FIG. 14

46A  46B  46C

45

| MIN | SEC | FRAME |

$A_{N+1M}$ | $A_{N+1M+1}$ | $A_{N+1M+2}$ | $A_{N+1M+3}$ | $A_{N+1M+4}$

$A_{N+1M+5}$ | $A_{N+1M+6}$ | $A_{N+1M+7}$ | $A_{N+1M+8}$ | $A_{N+1M+9}$

$A_{N+1M+10}$ | $A_{N+1M+11}$ | $A_{N+1M+12}$ | $A_{N+1M+13}$ | $A_{N+1M+14}$

IN1 ⌇ IN15

47

AE

48

## FIG. 16

## FIG. 15 A

46A    46B    46C          45

| MIN | SEC | FRAME |

| T | U | V | W | X |
| Y | Z | A | B | C |
| D | E | F | G | H |

IN1
?
IN15

~47

~AE

~48

## FIG. 15 B

46A    46B    46C          45

| MIN | SEC | FRAME |

| $A_N$ | $A_{N+1}$ | $A_{N+2}$ | $A_{N+3}$ | $A_{N+4}$ |
| $A_{N+5}$ | $A_{N+6}$ | $A_{N+7}$ | $A_{N+8}$ | $A_{N+9}$ |
| $A_{N+10}$ | $A_{N+11}$ | $A_{N+12}$ | $A_{N+13}$ | $A_{N+14}$ |

IN1
?
IN15

~47

~AE

~48